# EUROPEAN PATENT APPLICATION

(11) **EP 1 894 707 A1**
(43) Date of publication of application: **05.03.2008**
(21) Application number: 06018505.5
(22) Date of filing: 04.09.2006
(51) Int. Cl.: B29C 73/16, B60C 29/06

(54) **Repair kit for inflatable articles**

(71) Applicant: Active Tools A/S, 8660 Skanderborg (DK)
(72) Inventor: Laetgaard, Thomas, DK-8700 Horsens (DK); Egelund, Peter, 8355 Solbjerg (DK)
(74) Representative: Nielsen, Leif

(57) **Abstract**

The present invention relates to a repair kit for inflatable articles such as tires, comprising a container (10) of sealing liquid, with connecting means (12) for connecting to a compressed air supply and outlet means (17) for connecting to the article to be repaired. Furthermore, the container (10) consists of an outer shell acting as a cylinder and an inner part acting as a piston (13) driven forward in the cylinder by compressed air, and forcing the sealing liquid into the article to be repaired. At a specific position the piston (13) is brought into contact with means (20) causing the compressed air to pass the piston (13) and flow into the article to be inflated. When the container (10) is empty, air is automatically pumped through the cylinder, and the air passes the piston (13) so as to end in the inflatable article.

## Description

### Field of the Invention

The present invention relates to a repair kit for inflatable articles such as tires, comprising a container of sealing liquid, where the container at one position, typically at one end, has connecting means for connecting to a compressed air supply and at another position, typically at the other end, has outlet means for connecting to the article to be repaired. Furthermore, the container consists of an outer shell acting as a cylinder and an inner part acting as a piston. The piston is driven forward in the cylinder by compressed air, and forces the sealing liquid out of the cylinder and into the article to be repaired and inflated.

### Description of the Prior Art

Repair kits for repairing a flat tire or other inflatable articles, where a sealing liquid is injected into the inflatable article are well-known. Some car manufacturers have in fact discarded the spare wheel in some models and instead provided the car with a repair kit.

In WO 2005/085028 such a kit is disclosed. The kit according to WO 2005/085028 consists of a compressor and a container with a sealing liquid, where the container is fixed to an adapter and the adapter is fixed to the compressor unit. Between or in the adapter or the container a valve system is placed through which compressed air and/or sealing liquid is led to the inflatable article.

In US 6,283,172 another kit for repairing an inflatable article is disclosed. This kit is also provided with a container with sealing liquid. The container is placed in a pressure tank arranged in connection with a compressor. The container is subject to external pressure in the tank. The external pressure forces the sealing liquid into the inflatable article.

One drawback of both solutions is that a specific compressor is required along with the specific sealing liquid container.

### Description of the Invention

The present invention relates to a repair kit for inflatable articles such as tires and the like. The kit comprises a container with connection means for an air compressor and connection means for connecting the container to the article to be inflated. The container contains a sealing liquid and has an outer shell acting as a cylinder and an inner part acting as a piston, which can be moved inside the cylinder. An airtight sealing is provided between the piston and the cylinder. When connected to a compressor and pressurized the piston is driven forward in the cylinder by the compressed air, whereby the sealing liquid is forced out of the cylinder and into the article to be repaired and inflated.

A repair kit according to the invention with a cylinder part and a piston part is characterized in that at a specific piston position the piston is brought into contact with means causing the compressed air to pass the piston and flow into the article to be inflated. The term "piston" comprises all the parts, including sealing lips or the like, moved forward by the compressed air. When the container is empty, air is automatically pumped through the cylinder, and the air passes the piston so as to end in the inflatable article. This is an easy and trouble-free way to repair and inflate a tire or another inflatable article. After use the container can be disposed of as a waste product.

A container for a repair kit according to the invention can be formed with standard coupling means with standard valve thread. The container can be coupled directly to any compressor or alternatively indirectly via an adapter. This way a handy solution to be used with an unspecified compressor is achieved.

According to a preferred embodiment of the invention the means causing the compressed air to pass the piston and into the article to be inflated consist of at least one outwardly extending slot placed in the cylinder wall preferably near the end of the cylinder. When the container is under pressure the piston moves towards the end of the container, and when the container is empty or almost empty the piston has reached an area where the cylinder wall is fitted with one or more outwardly extending slots enabling the compressed air to flow into the slots and pass the piston.

According to another preferred embodiment of the invention the means causing the compressed air to pass the piston consist of at least one inwardly extending protrusion placed in the cylinder wall preferably near the end of the cylinder. The piston is preferably made of a flexible and resilient material and the one or more inwardly extending protrusions interact with the sealing of the piston and the seal is forced back to open a number of small channels for the compressed air to flow in.

According to yet another preferred embodiment of the invention the means causing the compressed air to pass the piston consist of at least one pointed protrusion placed inside the cylinder; which protrusion creates an air passage through the piston. When the piston reaches the end of the cylinder, the piston is pressed against one or more pointed or sharp protrusions that penetrate the piston to create a passage for the compressed air to flow.

All of these embodiments of the invention arc advantageous as the user does not have to evaluate whether there has been injected enough sealing liquid into the inflatable article. The only thing to do is to apply compressed air until the desired pressure is obtained in the article to be inflated.

According to a particular embodiment of the invention the position of the piston can be checked through a window in the container. The container can have an area extending along the length of the container, which area is more or less transparent. This way it is possible to check the position of the piston. Alternatively the entire container can be made of a transparent material.

According to a preferred embodiment of the invention, the cylinder is sealed at the outlet position by a pressure breakable seal. The breakable seal is broken by the sealing liquid, when the container is pressurized with compressed air from the inlet side. The container is sealed by means of a seal to prevent accidents as leakage from happening.

### Short Description of the Drawing

The invention is described further with reference to the drawing, where:
- FIG.1: shows a compressor unit fitted with a container for a repair kit.
- FIG. 2: shows the compressor unit without the front cover.
- FIG. 3: shows a cross section of a container.

### Detailed Description of the Invention

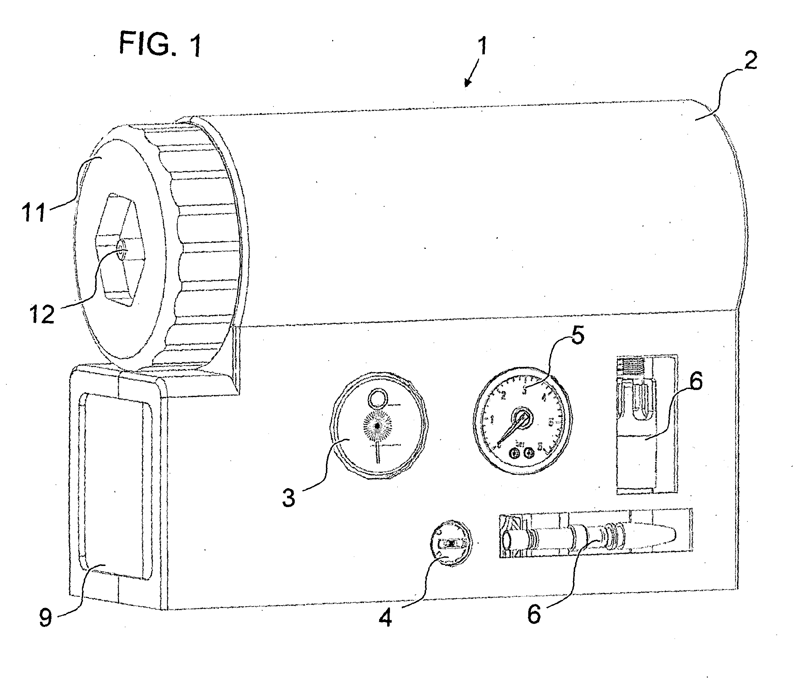

Fig. 1 shows a compressor unit 1 with a housing 2. The unit 1 is fitted with a start/stop switch 3, a deflation button 4, a pressure gauge 5 and adaptors 6 for multiple purpose use. Inside the housing there are three compartments 7, 8, 9, where an electrical cord, an air hose and a sealant hose are stored (not shown). Furthermore, a container 10 for sealing liquid is fitted in the housing 2. The housing 2 covers the container 10, and only the end cover 11 shows. The end cover 11 shown in fig. 1 is designed to screw onto the container 10 and has at the centre connection means 12 for an air hose.

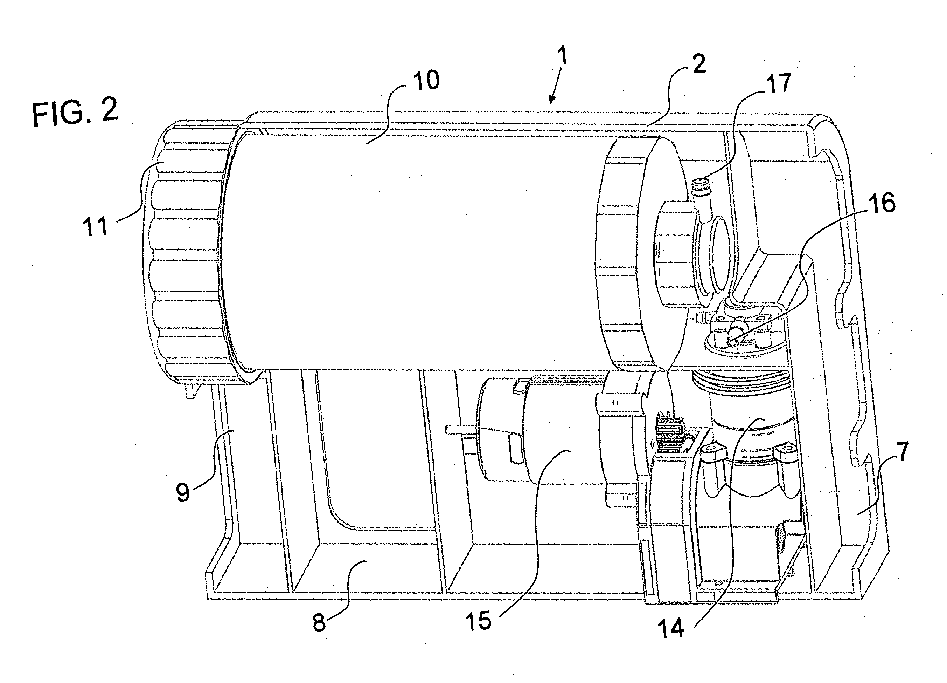

In fig. 2 one of the front cover parts 2 has been removed and the compartments 7 and 8 for storing the electrical cord and the sealing hose are visible. Furthermore, the cylinder 10 containing the sealing liquid and a piston 13 are visible. Below the container 10 the compressor 14 and the electrical motor 15 are placed. The outlet 16 from the compressor 14 is fitted with an air hose (not shown) which is stored in compartment 9. The cylinder 10 also has an outlet 17 connected to a hose (not shown) for the sealing liquid and for air. The hose from outlet 17 is stored in compartment 7.

When using the compressor unit 1 to repair a tire the hose for sealing liquid is connected to the tire, and the hose for compressed air is connected to the connection means 12 on the container 10 with the sealing liquid. The compressor 14 driven by the motor 15 is activated and pressurized air moves the piston 13 and thereby presses the sealant into the tire. When the piston reaches the end area of the container 1 the compressed air flows around the piston 13 and inflates the tire.

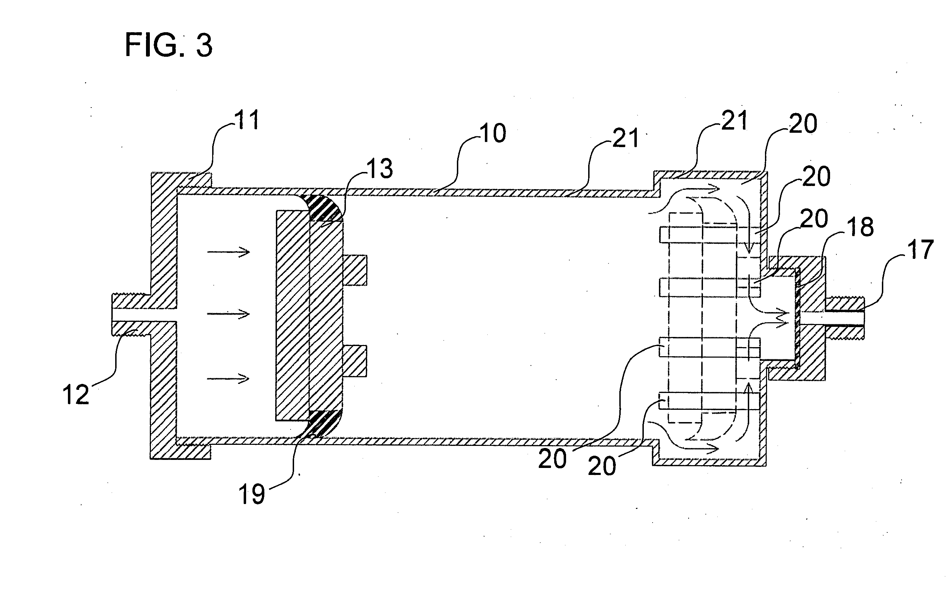

Fig. 3 shows a cross section of a container 10, where sealing liquid is contained between the piston 13 and a seal 18. The seal 18 breaks when a certain pressure is applied to it from the sealing liquid, which again is pressurized by the piston 13. When the seal 18 is broken the sealing liquid flows out through the outlet 17 and via a hose into the tire to be repaired as the piston 13 moves towards the outlet 17.

The piston 13 has a flexible sealing lip 19 and the container 10 shaped as a cylinder has a number of slots 20 in the side wall 21 close to the outlet 17. According to this embodiment the slot extends outwardly from the cylinder wall, however the slots could have been replaced by internal protrusions to push the sealing lip and thereby create passage for the compressed air.

The important issue is that a bypass opportunity for the compressed air is created when the piston 13 reaches the outlet 17.

## Claims

1. A repair kit for inflatable articles such as tires, comprising a container of sealing liquid, where the container at one position has connecting means for connecting to a compressed air supply and at another position has outlet means for connecting to the article to be repaired, furthermore the container consists of an outer shell acting as a cylinder and an inner part acting as a piston, where the piston when driven forward in the cylinder by compressed air, forces the sealing liquid out of the cylinder and into the article to be repaired and inflated, **characterized in that** the piston at a specific position comes into contact with means causing the compressed air to pass the piston and into the article to be inflated.

2. A repair kit for inflatable articles according to claim 1, **characterized in that** the means consist of at least one outwardly extending slot placed in the cylinder wall preferably near the end of the cylinder.

3. A repair kit for inflatable articles according to claim 1, **characterized in that** the means consist of at least one inwardly extending protrusion placed in the cylinder wall preferably near the end of the cylinder.

4. A repair kit for inflatable articles according to claim 1, **characterized in that** the means consist of at least one pointed protrusion placed inside the cylinder, which protrusion creates an air passage through the piston.

5. A repair kit for inflatable articles according to any of the claims 1 - 4, **characterized in that** the piston is made of a flexible and resilient material.

6. A repair kit for inflatable articles according to any of the claims 1 - 5, **characterized in that** the position of the piston is seen through a window in the container.

7. A repair kit for inflatable articles according to any of the claims 1 - 6, **characterized in that** the cylinder at the outlet position is sealed with a pressure breakable seal.
